# EUROPEAN PATENT APPLICATION

(11) **EP 4 696 559 A1**
(43) Date of publication of application: **18.02.2026**
(21) Application number: 24194772.0
(22) Date of filing: 15.08.2024
(51) Int. Cl.: B60R 1/072

(54) **AN ACTUATOR FOR A REAR VIEW DEVICE OF A VEHICLE**

(71) Applicant: Motherson Innovations Deutschland GmbH, 70327 Stuttgart (DE)
(72) Inventor: Lee, Youngmin, 14523 Bucheon-si (KR)

(57) **Abstract**

The disclosure relates to an actuator (100) for a rear view device (10) of a vehicle (1) comprising an actuator housing (120), wherein the actuator housing (120) is configured with an upper portion (120a) having an accommodation space (121) formed inside and having a bowl shape on an outside surface. The actuator housing (120) further is configured with a lower portion (120b) having a substantial circular segment. The actuator (100) further comprises a holder (180) disposed to partially surround the outer surface of the upper portion (120a) forming a ball joint, an upper cover (160) shielding at least partially the actuator housing (120), a connection element (190) having two edges, wherein the connection element is rotatably connected to the upper cover (160) and the two edges further connected to the holder (180) and a driving mechanism (200) disposed in the accommodation space (121) and configured to operate the holder (180) along an outer surface of the upper portion (120a) of the actuator housing (120). The upper portion (120b) is further configured to have a plurality of ribs (140) on the outer surface extending vertically from the lower portion (120b).

## Description

The present disclosure relates to an actuator for a rear view device of a vehicle and the rear view device thereof.

Mirror adjustment mechanism for a rear view device with an actuator is well known in the art. The pivotable arrangement of the holder relative to the lower housing makes it possible to adjust a mirror element coupled with the holder relative to the lower housing. The damping means prevents vibrations of the mirror element relative to the base part. Especially at higher speeds and with mirror elements having relatively high weights, such vibrations can become strongly manifest.

The conventional actuator generally includes a damping spring to provide damping. In an alternative design, the damping spring is formed as a spring leg that is integrally injection moulded with the holder, working in conjunction with the inner side of the mirror cap. However, the disadvantage of the spring force of the damping spring is not always constant and the spring force decreases over time.

Therefore, there is felt a need of an actuator that alleviates the aforementioned drawbacks of the conventional actuators.

DE202005018289 discloses a mirror adjustment mechanism comprising a damping means with a damping spring enforced by an auxiliary spring, wherein this auxiliary spring is provided as a bending rod, or a band spring arranged at the mirror support forcing a damping spring member against a damping spring counter member. The auxiliary spring is thereby received in complex bearing means. Such an arrangement is elaborately to assemble.

It is an object of the present disclosure to provide an actuator for a rear view device by which the drawbacks as mentioned above can be eliminated or at least reduced. In particular, it is one task to provide the actuator which are easy to assemble and prevent vibrations by reducing friction of the device when in use.

The objects are achieved by the features specified in claim 1. Advantageous embodiments are the subject of the dependent claims.

According to an aspect of the present disclosure an actuator for a rear view device of a vehicle, the actuator comprising an actuator housing configured with an upper portion having an accommodation space formed inside and having a bowl shape on an outside surface and a lower portion configured as a substantial circular segment. The actuator further comprises a holder disposed to partially surround the outer surface of the upper portion forming a ball joint, an upper cover shielding at least partially the actuator housing, and a connection element having two edges. The connection element is rotatably connected to the upper cover and the two edges of the connection element are further connected to the holder. The actuator further comprises a driving mechanism disposed in the accommodation space configured to operate the holder along an outer surface of the upper portion of the actuator housing. The outer surface of the upper portion has a predetermined curvature. The upper portion is further configured to have a plurality of ribs on the outer surface extending vertically from the lower portion.

According to an embodiment, the driving mechanism comprises at least one drive gear configured to rotationally move along a part of the accommodation space of the actuator housing. The driving mechanism further comprises a first driving motor and a second driving motor disposed in the accommodation space and configured to power the at least one drive gear.

The holder is configured to operatably connect to the at least one drive gear and is further configured to slide in a state of being in contact with the outer surface of the actuator housing according to an operation of the driving mechanism.

In an embodiment, the holder is configured to contact one or more of the plurality of ribs. The plurality of ribs further comprises a damping surface configured to be in contact with the holder and are unevenly spaced apart throughout the outer surface of the upper portion.

In an embodiment, the plurality of ribs is made from glass reinforced polymers with 0-30% of glass reinforcement.

In an embodiment, the connecting element is rotatably connected to the upper cover and the two edges of the connection element are further connected to the holder.

In an aspect, a rear view device for a vehicle, comprising at least one actuator is disclosed. The at least one actuator is accommodated in a housing and at least one rear view element is connected to a holder.

It should be noted that the features set out individually in the following description can be combined with each other in any technically advantageous manner and set out other forms of the present disclosure. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number. The description further characterizes and specifies the present disclosure in particular in connection with the Figures.

The present disclosure is described in detail with reference to the drawings attached wherein:
Figure 1 illustrates a rear view device according to the present disclosure in which an actuator according to the present disclosure is mounted according to an embodiment of the present disclosure;
Figure 2 illustrates a rear view device according to an embodiment of the present disclosure;
Figure 3 is a perspective view of the actuator according to various embodiments according of the present disclosure;
Figure 4 is a top view of the actuator according to various embodiments of the present disclosure;
Figure 5 illustrates an exploded perspective view of the actuator according to various embodiments of the present disclosure; and
Figure 6 illustrates a schematic perspective view of an actuator housing coupled with a holder.

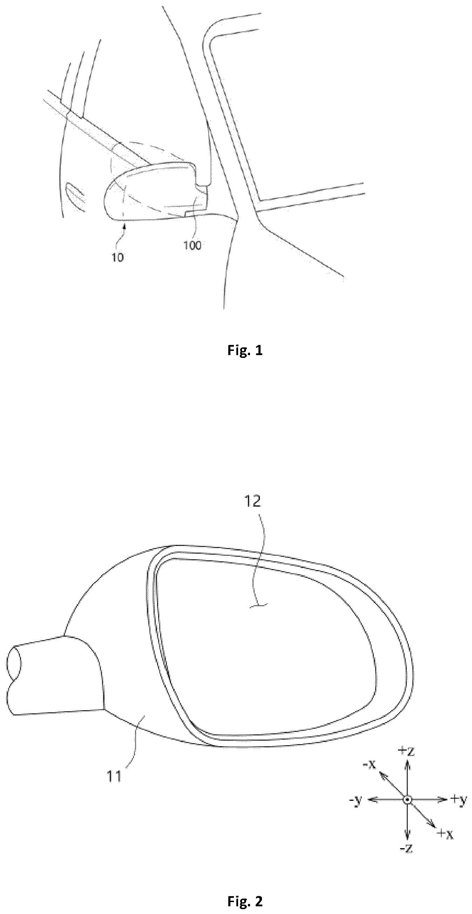

With reference to Fig. 1 and Fig. 2, an actuator 100 according to an embodiment of the present disclosure may be mounted on a rear view device 10 according to the present disclosure, in particular an rear view device 10 arranged outside the vehicle 1. Here, the rear view device 10 is an external mirror that may comprise a rear view element 12 providing a rear view to the driver. Further, the rear view device 10 may comprise a housing 11 accommodating the rear view element 12. For example, the rear view element 12 may be at least one mirror element.

Alternatively, the rear view element 12 may be implemented as a display that outputs an image obtained by photographing a peripheral region of the vehicle 1 or a camera device or a combination of all these. However, for the convenience of description, embodiments in which the rear view element is implemented as a mirror element will be mainly described below.

In the present disclosure, an external mirror 10 for a vehicle 1 will be described for convenience of description. However, the rear view device 10 in the present disclosure is not limited to vehicle 1, but may be applied to various transportation apparatus such as a two-wheel moving apparatus (for example, a motor bike).

The actuator 100 may be mounted in the external mirror 10 for a vehicle 1 to perform an operation for pivoting the rear view device 10 and/or rear view element 12 for a vehicle 1. For example, the actuator 100 may be accommodated in the housing 11 of the rear view device 10 to pivot the rear view element 12 mounted on the rear view device 10.

The actuator 100 may operate to pivot the rear view element 12 in all directions with respect to a surface on which the rear view element 12 is arranged. For example, when the rear view element 12 is inclined parallel to the Z-Y axis in the initial state, the actuator 100 may rotate the rear view element 12 with respect to all of the y-axis, the x-axis, and the z-axis. In the following description of the present disclosure, unless specifically mentioned, the -x-axis direction may refer to the traveling direction of the vehicle 1. For example, the x-axis direction may refer to the rear of the vehicle 1. In addition, the Y-axis direction may refer to a lateral direction of the vehicle 1. For example, the +y-axis direction may refer to a right direction of the vehicle 1, and the -y-axis direction may refer to a left direction of the vehicle 1. In addition, the Z-axis direction may refer to an upper or lower direction of the vehicle 1. For example, the -z-axis direction may refer to a lower direction of the vehicle 1, and the +z-axis direction may refer to an upper direction of the vehicle 1.

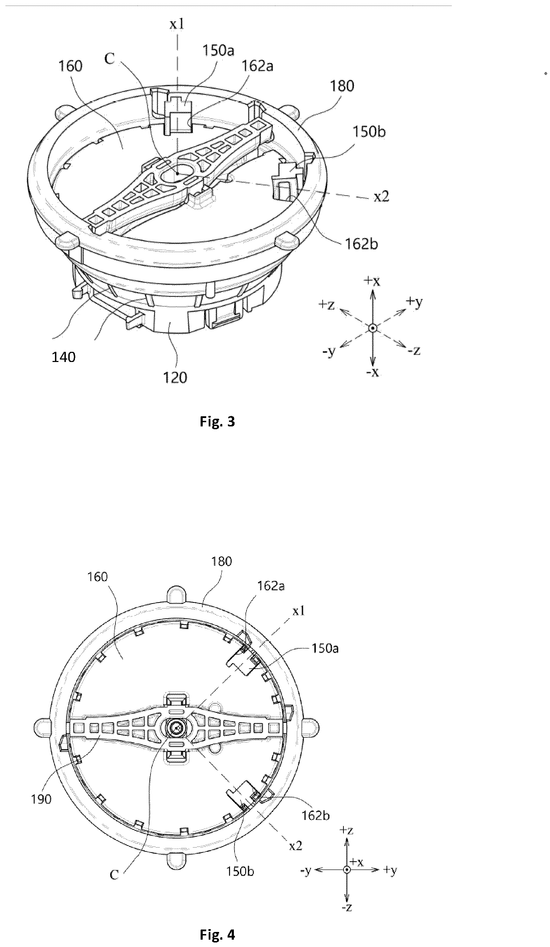

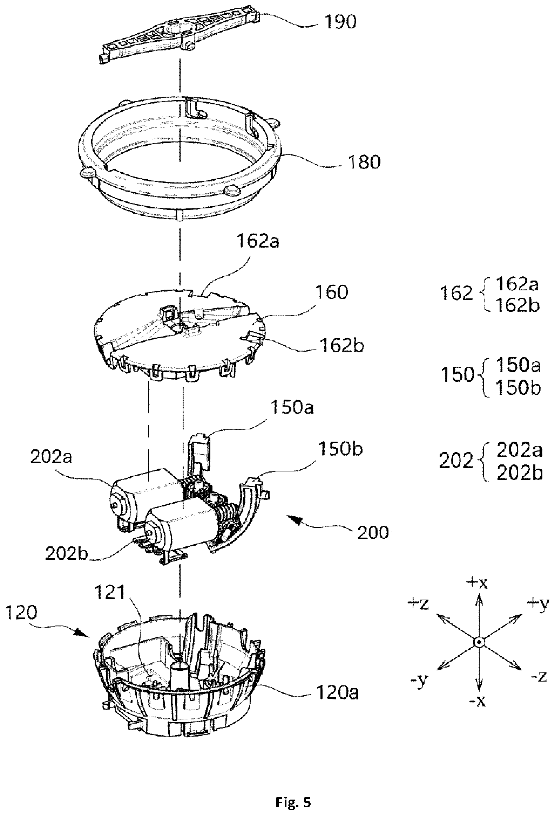

Referring to Figs. 3 to 5, the actuator 100 may comprise all or some of an actuator housing 120, a driving mechanism 200 accommodated in the actuator housing 120, an upper cover 160 shielding at least partially the actuator housing 120, a holder 180 adapted to surround at least a portion of the actuator housing 120, and a connection element 190 connected to the holder 180 and configured to operate by receiving power from the driving mechanism 140. The actuator 100 of the embodiments of FIG. 3 to FIG. 5 may have a configuration that is same as or similar to the actuator 100 of the embodiments for Fig. 1 and Fig. 2. According to various embodiments of the present disclosure, the actuator housing 120 comprises an upper portion 120a and a lower portion 120b. The upper portion 120b may provide a space in which the driving mechanism 200 may be accommodated. For example, the upper portion 120b may have a bowl shape in which an accommodation space 121 is formed, and the driving mechanism 200 may be arranged in the accommodation space 121. In an embodiment of the present disclosure, the upper portion 120b may be formed such that a width of an upper side (+x-axis direction) is greater than a width of a lower side (-x-axis direction).

In an embodiment, the driving mechanism 200 may comprise a driving motor 202 and a drive gear 150. The driving motor 202 may comprise first and second driving motors 202a and 202b.

However, it will be understood that the illustrated embodiments are exemplary, and fewer or more driving motors may be comprised. In an embodiment of the present disclosure, the driving motor 202 may be supplied with power from an external power source (e.g., an internal power source of the vehicle 1 of FIG. 1) to operate.

In one embodiment, the driving mechanism 200 may comprise the drive gear 150 that operates to pivot the rear view element 12 (e.g., the rear view element 12 of FIG. 2). For example, the drive gear 150 may comprise a first drive gear 150a and a second drive gear 150b. The first drive gear 150a may operate by receiving power of the first driving motor 202a, and the second drive gear 150b may operate by receiving power of the second driving motor 202b. The first drive gear 150a and the second drive gear 150b are symmetrical to each other, and unless specifically mentioned, the description of the first drive gear 150a may be applied to the second drive gear 150b.

In an embodiment, the upper cover 160 may be arranged on the upper portion 120a of the actuator housing 120 and may shield the accommodation space 121. In an embodiment of the present disclosure, the upper cover 160 may comprise an opening region 162 for providing a moving path of the drive gear 150. For example, the opening region 162 may comprise a first opening region 162a through which the first drive gear 150a passes and a second opening region 162b through which the second drive gear 150b passes.

In an embodiment, the holder 180 may be adapted to surround at least partially the outer surface of the actuator housing 120. The holder 180 may have a ring shape. In an embodiment, the holder 180 is viewed from the side surface (e.g., the y-axis direction or the z-axis direction), the width of the lower side (-x-axis direction) may be formed to be smaller than the width of the upper side (+x-axis direction). For example, when viewed from a side surface (e.g., a y-axis direction or a z-axis direction), the holder 180 and the actuator housing 120 may have shapes corresponding to each other. In an embodiment, a width (or diameter) of a part (e.g., an upper part (+x-axis direction)) of the holder 180 in the horizontal direction (y-axis or z-axis) may be greater than a width of the widest horizontal direction (y-axis or z-axis) of the actuator housing 120. In addition, a width of another part (e.g., a lower part (-x-axis direction)) of the holder 180 in the horizontal direction (y-axis or z-axis) may be smaller than a width of at least a part of the upper portion 120a (+x-axis direction) of the actuator housing 120. Accordingly, after the holder 180 and the actuator housing 120 are assembled, the actuator housing 120 may be prevented from being separated in the lower vertical direction (-x axis direction) of the holder 180.

In an embodiment, the holder 180 may be operably connected to the gear 150. For example, the holder 180 may be connected to each of the first drive gear 150a and the second drive gear 150b, and may be pivoted with respect to the horizontal plane (e.g., the y-z plane, for example, the surface of the rear view element 12) in correspondence to the operation of the first drive gear 150a and the second drive gear 150b. As the first drive gear 150a and the second drive gear 150b are arranged at right angles to each other, the holder 180 may be pivoted in all directions with respect to the horizontal plane (y-z plane). In an embodiment of the present disclosure, the holder 180 may be connected to the rear view element (e.g., the rear view element of FIG. 2), and the rear view element may be pivoted corresponding to the operation of the holder 180.

In an embodiment, the connection element 190 may be operably connected between the upper cover 160 and the holder 180. For example, a central part of the connection element 190 may be rotatably connected to a central region of the upper cover 160, and both edges of the connection element 190 may be connected to the holder 180. As a part of the connection element 190 (for example, a central region connected to the upper cover 160) is supported by the upper cover 160, the holder 180 may be stably pivoted.

In an embodiment, the first drive gear 150a and the second drive gear 150b may be adapted to form a designated angle with respect to a horizontal surface (e.g., a z-y plane) of an upper region of the holder 180. Since the rear view element 12 (e.g., the rear view element 12 of FIG. 2) is arranged above the holder 180, the z-y plane may refer to a surface parallel to the surface of the rear view element 12. For example, the designated angle may be approximately a right angle.

In an embodiment, an angle formed by the axis x1 extending from the center point c of the width direction plane (z-y plane) of the actuator 100 to one end of the first drive gear 150a and the axis x2 extending from the center point c to one end of the first drive gear 150a of the second drive gear 150b may be represented as a right angle. As will be described later, the first drive gear 150a may rotate about a direction parallel to the x2 axis, and the second drive gear 150b may rotate about a direction parallel to the x1 axis. For example, the x1 axis may be the same axis as the y axis, and the x2 axis may be the same axis as the z axis. As another example according to an embodiment of the present disclosure, the x1 axis may be the same axis as the z axis, and the x2 axis may be the same axis as the y axis.

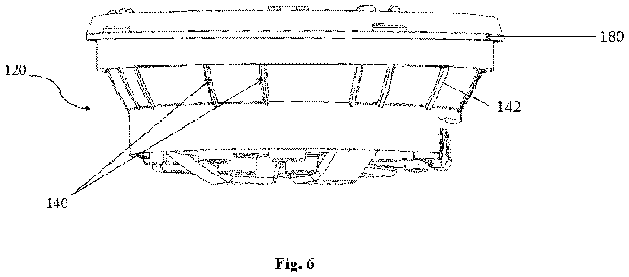

As shown in fig. 6, the upper portion 120a of the actuator housing 120 may be further adapted to have plurality of ribs 140 on outer surface of the upper portion 120a. The plurality of ribs 140 are extended vertically from the lower portion 120b as can be seen in fig. 6. The plurality of ribs 140 are unevenly spaced apart throughout the outer surface of the upper portion 120a.

In an embodiment, the plurality of ribs 140 may be made from using a high-strength, low-weight polymer. Particularly, the plurality of ribs 140 are made from glass fiber reinforced polymers having 0-30% of glass reinforcement. More particularly, the plurality of ribs 140 are made from PA6-GF30% plastic.

The glass fiber as a reinforcement material offers several advantages including excellent mechanical properties, corrosion resistance and ease of fabrication.

Further, glass fibers provide high tensile strength and stiffness, and the polymer matrix flexibility and durability. The glass fiber reinforced polymer ribs exhibit a superior strength to weight ratio compared to traditional materials such as metals. This ensures that the ribs can withstand significant loads and stresses while adding minimal weight to the overall assembly. The glass fibers impart high stiffness to the plurality of ribs, maintaining the structural integrity of the assembly and preventing deformation when operational.

In an embodiment, coupling of the holder 180 with the upper portion 120a of the actuator housing 120 is in such a way that the holder 180 may contact only the plurality of ribs 140. The plurality of ribs 140 configures a damping surface 142 adapted to be in contact with the holder 180 (as seen in Fig. 6). The damping surface 142 prevents vibrations when the actuator 100 is operational.

Although the subject matter of the present disclosure has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims, i.e. the features disclosed in the foregoing description, the claims, and the drawings may be essential, both individually and in any combination, for accomplishing the present disclosure in its various embodiments. The embodiments shown herein are only examples of the present disclosure and must therefore not be understood as being restrictive. Alternative embodiments considered by the skilled person are equally covered by the scope of protection of the present disclosure.

### Reference Signs

- 1: vehicle
- 10: external mirror
- 11: housing
- 12: rear view element
- 100: actuator
- 120: actuator housing
- 120a: upper portion
- 120b: lower portion
- 121: accommodation space
- 140: plurality of ribs
- 142: damping surface
- 150: drive gear
- 150a: first drive gear
- 150b: second drive gear
- 160: upper cover
- 162: opening region
- 162a: first opening region
- 162b: second opening region
- 180: holder
- 190: connection element
- 200: driving mechanism
- 202: driving motor
- 202a: first driving motor
- 202b: second driving motor

## Claims

1. An actuator (100) for a rear view device (10) of a vehicle (1), the actuator (100) comprising:
an actuator housing (120) configured with;
an upper portion (120a) having an accommodation space (121) formed inside and having a bowl shape on an outside surface; and
a lower portion (120b) configured as a substantial circular segment,
a holder (180) disposed to partially surround the outer surface of the upper portion (120a) forming a ball joint;
an upper cover (160) shielding at least partially the actuator housing (120);
a connection element (190) having two edges, wherein the connection element (190) is rotatably connected to the upper cover (160) and the two edges of the connection element (190) are further connected to the holder (180); and
a driving mechanism (200), disposed in the accommodation space (121), configured to operate the holder (180) along an outer surface of the upper portion (120a) of the actuator housing (120);
wherein the upper portion (120a) is configured to have a plurality of ribs (140) on the outer surface extending vertically from the lower portion (120b).

2. The actuator (100) according to claim 1, wherein the driving mechanism (200) comprises at least one drive gear (150a, 150b) configured to rotationally move along a part of the accommodation space (121) of the actuator housing (120) .

3. The actuator (100) according to any of the preceding claims, wherein the driving mechanism (200) further comprises a first driving motor (202a) and a second driving motor (202b) disposed in the accommodation space (121) and configured to power the at least one drive gear (150a, 150b).

4. The actuator (100) according to any of the preceding claims, wherein the holder (180) is configured to operatably connect to the at least one drive gear (150a, 150b).

5. The actuator (100) according to any of the preceding claims, wherein the holder (180) is configured to slide in a state of being in contact with the outer surface of the actuator housing (120) according to an operation of the driving mechanism (200).

6. The actuator (100) according to any of the preceding claims, wherein the holder (180) is configured to contact one or more of the plurality of ribs (140).

7. The actuator (100) according to claim 5, wherein the plurality of ribs (140) comprises a damping surface (142) configured to be in contact with the holder (180).

8. The actuator (100) according to any of the preceding claims, wherein the outer surface of the actuator housing (120) has a predetermined curvature.

9. The actuator (100) according to any of the preceding claims, wherein the plurality of ribs (140) is unevenly spaced apart throughout the outer surface of the upper portion (120a).

10. The actuator (100) according to claim 1, wherein the plurality of ribs (140) is made from glass reinforced polymers.

11. The actuator (100) according to claim 1, wherein the plurality of ribs (140) is made from glass reinforced polymers with 0-30% of glass reinforcement.

12. A rear view device (10) for a vehicle (1), comprising at least one actuator (100) according to any one of the preceding claims.

13. The rear view device (10) according to claim 12, wherein the at least one actuator (100) is accommodated in a housing (11) and at least one rear view element (12) is connected to a holder (180).
